Europäisches Patentamt

European Patent Office

Office européen des brevets

(11) Veröffentlichungsnummer: **0 017 002**
**A1**

(12) # EUROPÄISCHE PATENTANMELDUNG

(21) Anmeldenummer: **80101164.4**

(22) Anmeldetag: **07.03.80**

(51) Int. Cl.³: **C 08 L 23/08, C 08 L 31/04,**
**C 08 K 3/22, C 08 K 3/36,**
**C 08 K 5/34, H 01 B 3/44**

(30) Priorität: **10.03.79 DE 2909498**

(43) Veröffentlichungstag der Anmeldung: **15.10.80**
**Patentblatt 80/21**

(84) Benannte Vertragsstaaten: **AT BE CH DE FR GB IT LU NL SE**

(71) Anmelder: **BASF Aktiengesellschaft,**
**Carl-Bosch-Strasse 38, D-6700 Ludwigshafen (DE)**

(72) Erfinder: **Pfirrmann, Guenther, Dr., Osloer Weg 38,**
**D-6700 Ludwigshafen (DE)**
Erfinder: **Koehnlein, Ernst, Dr., Ungsteiner Strasse 4,**
**D-6700 Ludwigshafen (DE)**
Erfinder: **Koessler, Ludwig, Schlachthofstrasse 24A,**
**D-6718 Gruenstadt 1 (DE)**
Erfinder: **Moorwessel, Dieter, Dr., Dilsberger Strasse 3-5,**
**D-6800 Mannheim 51 (DE)**

(54) **Flammhemmende thermoplastische Formmassen und ihre Verwendung für Kabelisolierungen.**

(57) Die Erfindung betrifft eine flammhemmende thermoplastische Formmasse, die aus 100 Gewichtsteilen eines Äthylen-Vinylacetat-Copolymerisats, das 20 bis 40 Gew.% Vinylacetat einpolymerisiert enthält, 60 bis 170 Gewichtsteilen Aluminiumhydroxid der Teilchengröße 0,01 bis 10 $\mu$m, 6 bis 40 Gewichtsteilen Siliziumdioxid der Teilchengröße 0,01 bis 50 $\mu$m und üblichen Menge polymerem 2,2,4-Trimethyl-1,2-dihydrochinolin, Füllstoffen und Stabilisatoren besteht. Bei derartigen Formmassen entstehen im Brandfalle keine korrodierenden Zersetzungsprodukte. Die neuen Formmassen sollen bevorzugt Verwendung finden für vernetzbare Kabelisolierungen und Kabelummantelungen.

EP 0 017 002 A1

BASF Aktiengesellschaft O.Z. 0050/033702

BEZEICHNUNG GEÄNDERT
siehe Titelseite

Flammhemmende thermoplastische Formmassen

Die Erfindung betrifft flammhemmende thermoplastische Formmassen, die einen thermoplastischen Kunststoff und Aluminiumhydroxid sowie Siliciumdioxid als flammhemmende Mittel
enthalten.

Bei derartigen flammhemmenden Formmassen, die keine Halogenverbindungen als flammhemmende Mittel enthalten, entstehen im Brandfalle keine korrodierenden Zersetzungsprodukte
wie Halogenwasserstoffe oder Halogene. Dieser Vorteil - der
z.B. bei der Kabelherstellung besonders gesucht ist - muß
jedoch mit dem Nachteil erkauft werden, daß die verarbeitungstechnischen Eigenschaften der Aluminiumhydroxid oder
Siliciumdioxid enthaltenden thermoplastischen Kunststoffe
bei der Herstellung von Kabelummantelungen noch einige
Wünsche offen lassen.

Der Erfindung lag dementsprechend die Aufgabe zugrunde,
flammhemmende, thermoplastische Formmassen der eingangs definierten Art aufzuzeigen, die verbesserte Eigenschaften
aufweisen. Das Schwergewicht wurde dabei gelegt auf verbesserte Alterungsstabilität, Reißfestigkeit und Vernetzbarkeit der flammhemmenden thermoplastischen Formmasse.

Eine weitere Aufgabe der vorliegenden Erfindung war es,
thermoplastische Formmassen der oben definierten Art aufzufinden, die für mit Peroxid oder energiereicher Strahlung
vernetzbare Kabelisolierungen und Kabelummantelungen verwendbar sind.

Diese Aufgaben wurde erfindungsgemäß durch thermoplastische
Formmassen gelöst, die bestehen aus:

Fre/Fe

A) 100 Gewichtsteilen Äthylen-Vinylacetat-Copolymerisat, das 60 bis 80 Gew.% Äthylen und 20 bis 40 Gew.% Vinylacetat einpolymerisiert enthält - wobei die Summe der Gewichtsprozente stets 100 ist - und das einen Schmelzindex, gemessen nach ASTM-D-1238-70 bei 190°C und 2,16 kg Belastung von 1,0 bis 20,0 g/10 min aufweist,

B) 60 bis 170 Gewichtsteilen Aluminiumhydroxid, das eine Teilchengröße von 0,01 bis 10 um hat.

C) 6 bis 40 Gewichtsteile Siliciumdioxid, das eine Teilchengröße von 0,01 bis 50 um hat.

D) 0,3 bis 1,5 Gewichtsteile polymeres 2,2,4-Trimethyl-1,2-dihydrochinolin, das einen Erweichungsbereich von 100 bis 118°C aufweist und gegebenenfalls

E) übliche Füllstoffe und übliche Stabilisatoren in üblichen Mengen.

Bevorzugt enthalten die erfindungsgemäßen Formmassen 70 bis 110 Gewichtsteile Aluminiumhydroxid und 6 bis 10 Gewichtsteile Siliciumdioxid.

Es ist ein Vorteil der erfindungsgemäßen Formmassen, daß sie durch ein übliches Peroxid oder durch, energiereiche Strahlung, beispielsweise zwischen 8 und 30 Mrad, vernetzbar sind, bei Schwelbränden keine Korrosionsschäden verursachen, gegen Alterung gut stabilisiert sind und daß sie eine erhöhte Reißfestigkeit aufweisen.

Unter thermoplastischen Formmassen im Sinne der Erfindung werden extrudierbare Kunststoffmassen verstanden, die vernetzt werden können. Die erfindungsgemäßen Massen sind nach ihrer Vernetzung durch Peroxide oder energiereiche

0017002

Strahlen für Kabel- und Drahtisolierungen geeignet.

Die Äthylen-Vinylacetat-Copolymerisate sind an sich wohlbekannt und im Handel erhältlich, so daß sich nähere Ausführungen erübrigen.

Für das einzusetzende Aluminiumhydroxid-$Al(OH)_3$ - und das Siliciumdioxid - $SiO_2$ - gilt sinngemäß das zum Äthylencopolymerisat gesagte.

Auch das polymere 2,2,4-Trimethyl-1,2-dihydrochinolin ist an sich als Alterungsstabilisator bekannt und beispielsweise in den US-Patentschriften 27 18 517, 30 47 521, 32 44 683, 32 96 189 und 39 01 849 beschrieben.

Als in Betracht kommende übliche Füllstoffe und übliche Stabilisatoren sind zu nennen beispielsweise Ruß, Farbpigmente, diverse phenolische oder sonstige Stabilisatoren.

Unter üblichen Mengen werden dabei Mengen von weniger als 20 Gewichtsteilen pro 100 Gewichtsteile Äthylen-Vinylacetat-Copolymerisat verstanden.

Die Herstellung der erfindungsgemäßen Formmassen aus ihren Komponenten kann in einschlägig üblichen Mischvorrichtungen in einschlägig üblicher Weise erfolgen.

Die neuen Formmassen eignen sich vor allem zum Herstellen von Ummantelungen und Isolierungen für elektrische Kabel.

<u>Patentansprüche</u>

1. Flammhemmende thermoplastische Formmassen bestehend aus

   A) 100 Gewichtsteilen Äthylen-Vinylacetat-Copolymerisat, das 60 bis 80 Gew.% Äthylen und 20 bis 40 Gew.% Vinylacetat einpolymerisiert enthält – wobei die Summe der Gewichtsprozente stets 100 ist – und das einen Schmelzindex, gemessen nach ASTM-D-1238-70 bei 190°C und 2,16 kg Belastung, von 1,0 bis 20,0 g/10 min aufweist,

   B) 60 bis 170 Gewichtsteilen Aluminiumhydroxid, das eine Teilchengröße von 0,01 bis 10 µm hat,

   C) 6 bis 40 Gewichtsteile Siliciumdioxid, das eine Teilchengröße von 0,01 bis 50 µm hat,

   D) 0,3 bis 1,5 Gewichtsteile polymeres 2,2,4-Trimethyl-1,2-dihydrochinolin, das einen Erweichungsbereich von 100 bis 118°C aufweist und gegebenenfalls

   E) übliche Füllstoffe und übliche Stabilisatoren in üblichen Mengen.

2. Formmasse nach Anspruch 1, <u>dadurch gekennzeichnet,</u> daß sie 70 bis 110 Gewichtsteile Aluminiumhydroxid und 6 bis 15 Gewichtsteile Siliciumdioxid enthält.

3. Verwendung der Formmassen nach Anspruch 1 für mit Peroxid oder mit energiereicher Strahlung vernetzbare Kabelisolierungen und Kabelummantelungen.

| | **EINSCHLÄGIGE DOKUMENTE** | | **KLASSIFIKATION DER ANMELDUNG (Int.Cl. 3)** |
|---|---|---|---|
| Kategorie | Kennzeichnung des Dokuments mit Angabe, soweit erforderlich, der maßgeblichen Teile | betrifft Anspruch | |
| | US - A - 3 832 326 (NORTH) <br> + Spalte 6; Tabelle C; Patent- ansprüche 1-4 + <br> -- | 1-3 | C 08 L 23/08 <br> C 08 L 31/04 <br> C 08 K 3/22 <br> C 08 K 3/36 <br> C 08 K 5/34 <br> H 01 B 3/44 |
| A | US - A - 3 741 929 (BURTON) <br> + Gesamt + <br> ---- | 1-3 | |

**RECHERCHIERTE SACHGEBIETE (int. Cl. 3)**

C 08 L

C 08 K

H 01 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 03-06-1980 | DICHER |